# EUROPEAN PATENT APPLICATION

(11) **EP 2 159 619 A1**
(43) Date of publication of application: **03.03.2010**
(21) Application number: 08015493.3
(22) Date of filing: 02.09.2008
(51) Int. Cl.: G02B 7/00

(54) **A sight glass assembly**

(71) Applicant: Siemens Aktiengesellschaft, 80333 München (DE)
(72) Inventor: Schachinger, Peter, 42737 Billdal (SE)

(57) **Abstract**

A sight glass assembly

A sight glass assembly comprises
a housing (1) having a circular opening (2) therein which opening (2) provides an annular shoulder (3) and a frusto-conically shaped wall (4),
a circular sight glass plate (6) having a cylindrical rim wall (7),
a sight glass packing member (8) having a cylindrical inner wall (10) and a frusto-conically shaped outer wall (11) and
being interposed between the cylindrical rim wall (7) of the sight glass plate (6) and the frusto-conically shaped wall (4) of the opening (2) of the housing (1), and
an annular gasket (5) interposed between the annular shoulder (3) and the sight glass plate (6).

To improve the bending strength, pressure and impact resistance of the sight glass plate (6), the sight glass packing member (8) comprises a full ring (9) of metal kept in position by press seating in the opening (2) without any further fixing means.

## Description

The invention relates to a sight glass assembly comprising
- a housing having a circular opening therein which opening provides an annular shoulder and a frusto-conically shaped (truncated cone-shaped) wall,
- a circular sight glass plate having a cylindrical rim wall,
- a sight glass packing member having a cylindrical inner wall and a frusto-conically shaped outer wall and being interposed between the cylindrical rim wall of the sight glass plate and the frusto-conically shaped wall of the opening of the housing, and
- an annular gasket interposed between the annular shoulder and the sight glass plate.

In such a sight glass assembly suitable for use with highpressure vessels and known from US 3,625,390, the sight glass packing member is formed from a resilient material such as silicone rubber. After insertion of the sight glass plate and the sight glass packing member in the opening of the housing, an annular faceplate is mounted on and secured to the housing about its circumference to apply a force on the packing member directed against the frusto-conically shaped wall of the opening in the housing, whereby the packing member is forced toward the sight glass to provide a compressive radial component of force about the periphery of the sight glass and an axial component of force opposing the pressure in the vessel.

EP 1 229 371 B1 discloses another optical glass assembly, wherein at least two wedges are positioned between the truncated cone-shaped inner wall of the opening of the housing and the peripheral surface of the optical glass. The outer surface of the wedges is truncated cone-shaped and the inner surface is designed to apply pressure on the optical glass and may be flat or polygonal depending on the outer shape of the optical glass. The fastening of the optical glass is not tight so that it is not suited for sight glasses which shall provide a barrier between different environments.

Optical glasses have limited bending strength, pressure and impact resistance which are important properties for use in industrial environments. To improve these properties, US 4,162,826 discloses a sight glass assembly wherein a circular sight glass plate is inserted into a metal ring. The inner surface of the ring has a taper of 2° to facilitate the assembly. Placed on a setter plate, the cold assembled parts are heated in a furnace. As the ring expands faster than the sight glass plate, the sight glass plate falls onto the setter. The glass becomes fluid and conforms to the inner surface of the ring. When cooled down, the metal ring exerts an even radial pressure on the cylindrical rim wall of the sight glass plate, thus improving its thermal and mechanical shock resistance.

It is therefore an object of the invention to provide a sight glass assembly with these properties improved in a simpler way.

According to the invention, this is achieved in that, in the sight glass assembly of the kind described in the introduction above, the sight glass packing member comprises a full ring of metal kept in position by press seating in the opening without any further fixing means.

The final position of the metal ring in the opening of the housing is determined by the pressing force applied to the ring. As a result, the metal ring exerts an even radial pressure on the cylindrical rim wall of the sight glass plate, which rim pressure is determined by the aforementioned pressing force. The radial compression of the sight glass plate thus improves its bending strength, pressure and impact resistance.

To avoid any frictional sliding between glass and metal, the sight glass packing member and the sight glass plate preferably form a pre-assembled unit which is then pressed in the opening of the housing. For this purpose, a pressing tool may be used which impacts on the metal ring and at the same time, by its geometry, determines the position of the sight glass plate in the metal ring.

To reduce or avoid undesired etalon effects which are created by windows or other parallel reflecting surfaces in the optical path of, e.g., a laser gas analyzer, the annular shoulder of the opening in the housing may tilted with respect to the plane of the housing so that the sight glass plate is in a tilted mounting position. Additionally or alternatively, the sight glass plate may be wedge-shaped.

An embodiment of the present invention will now be described, by way of example only, with reference to the drawings, in which:
- Figure 1A: is an exploded view of a sight glass assembly comprising a planar sight glass;
- Figure 1B: is an assembled view of the embodiment illustrated in Figure 1A;
- Figure 2A: is an exploded view of a sight glass assembly comprising a wedged sight glass in a tilted mounting position; and
- Figure 2B: is an assembled view of the embodiment illustrated in Figure 2A.

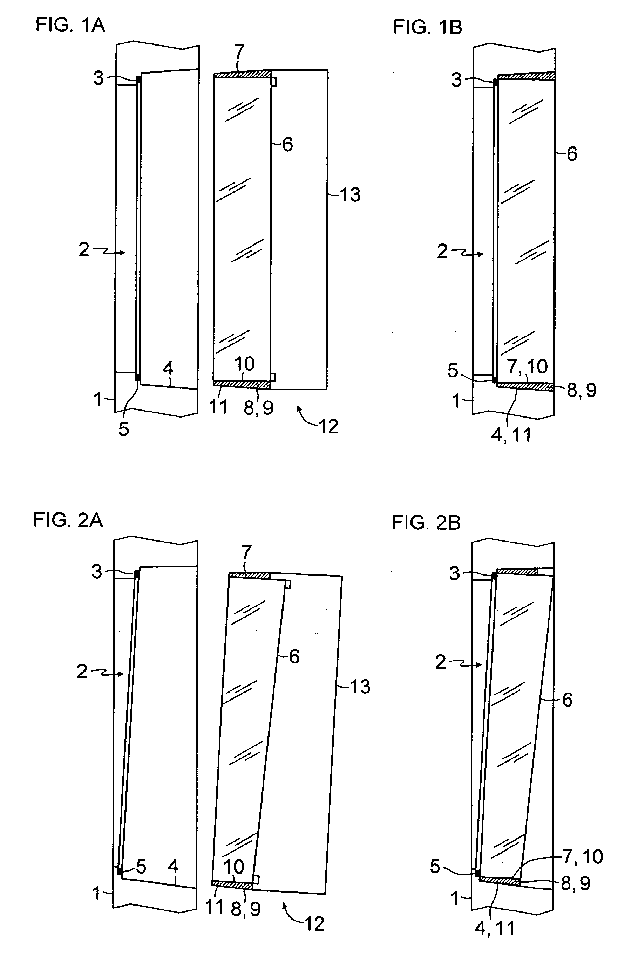

Referring to the drawings, wherein the same reference numbers and symbols are used throughout to designate the same or similar parts, Figures 1A through 2B show a part of a housing 1 which may be the wall of a vessel containing a pressurized and/or corrosive medium or which may be a flange to be mounted, e.g. bolted or welded, to such a vessel. The housing 1 contains a circular opening 2 which, at one point, is enlarged to provide an annular shoulder 3 and which is further enlarged beyond that point to provide a frusto-conically shaped wall 4. The apex angle of the cone is about between 0,1° and 8° and more acute than shown in the drawings. An annular gasket 5 in form of an O-ring, fill compound or the like is seated on the shoulder 3.

In the example of Figures 1A and 1B, the annular shoulder 3 is parallel to the plane of the housing 1, whereas in the example of Figures 2A and 2B, the annular shoulder 3 is tilted with respect to the plane of the housing 1,

A sight glass plate 6, which has a cylindrical rim wall 7, is inserted into a sight glass packing member 8 which is comprised of a full ring 9 of metal. The metal ring 9 has a cylindrical inner wall 10 of the same or slightly larger diameter than the one of the sight glass plate 6. The metal ring 9 further has a frusto-conically shaped outer wall 11 of the same apex angle as that of the frusto-conically shaped wall 4 of the opening 2 in the housing 1.

In the example of Figures 1A and 1B, the sight glass plate 6 is plane, whereas it is wedged in the example of Figures 2A and 2B.

The metal ring 9 and the inserted sight glass plate 6 form a pre-assembled unit 12 which, by means of a pressing tool 13, is pressed in the opening 2 of the housing 1. The pressing tool 13 is designed to exert a predetermined pressing force on the metal ring 9 and at the same time, by its geometry, to determine the position of the sight glass plate 6 in the metal ring 9. The final position of the metal ring 9 in the opening 2 of the housing 1 is determined by the pressing force applied to the ring 9. As a result, the metal ring exerts an even radial pressure on the cylindrical rim wall 10 of the sight glass plate 6, which rim pressure is determined by the aforementioned pressing force. The radial compression of the sight glass plate 6 thus improves its bending strength, pressure and impact resistance.

The sight glass assembly can either be in contact with the pressurized medium in the vessel on the right side, where there is a mechanical locking of the metal ring 9 and minor contact between the medium and the gasket 5, or on the left side, where the metal ring 9 will not be in contact with the medium. In the latter case, there is no mechanical stop and the apex angle of the frusto-conically shaped walls 4 and 11 must be below approximately 0,5° to withstand the pressure from the medium. In the other, first, case a typical value for the cone angle may be 1,5°.

## Claims

1. A sight glass assembly comprising
- a housing (1) having a circular opening (2) therein which opening (2) provides an annular shoulder (3) and a frusto-conically shaped wall (4),
- a circular sight glass plate (6) having a cylindrical rim wall (7),
- a sight glass packing member (8) having a cylindrical inner wall (10) and a frusto-conically shaped outer wall (11) and being interposed between the cylindrical rim wall (7) of the sight glass plate (6) and the frusto-conically shaped wall (4) of the opening (2) of the housing (1), and
- an annular gasket (5) interposed between the annular shoulder (3) and the sight glass plate (6),
**characterized in that**
- the sight glass packing member (8) comprises a full ring (9) of metal kept in position by press seating in the opening (2) without any further fixing means.

2. The sight glass assembly of claim 1, wherein the sight glass packing member (8) and the sight glass plate (6) form a pre-assembled unit (12) which is press seated in the opening (2).

3. The sight glass assembly of claim 1 or 2, wherein the annular shoulder (3) of the opening (2) in the housing (1) is tilted with respect to the plane of the housing (1).

4. The sight glass assembly of one of the preceding claims, wherein the sight glass plate (6) is wedge-shaped.
